# EUROPÄISCHE PATENTANMELDUNG

(11) **EP 1 619 851 A1**
(43) Veröffentlichungstag der Anmeldung: **25.01.2006**
(21) Anmeldenummer: 04017538.2
(22) Anmeldetag: 23.07.2004
(51) Int. Cl.: H04L 29/06, H04L 12/24

(54) **Zurücksetzen von Sicherheitsmechanismen**

(71) Anmelder: SIEMENS AKTIENGESELLSCHAFT, 80333 München (DE)
(72) Erfinder: Hartlage, Heribert, 81241 München (DE)

(57) **Zusammenfassung**

Der Sicherheitsmechanismus SM eines Erzeugnisses E wird so realisiert, dass die ihm zugeordneten Daten D_{SM} im Unterschied zu den restlichen Daten D_{CM} des Erzeugnisses E nicht von außerhalb des Erzeugnisses E zugänglich sind. Das Zurücksetzen wird durch Löschen der Daten D_{SM} infolge einen Eingriffs von innerhalb des Erzeugnisses E bewirkt.

Vorzugsweise sind die Daten D_{SM} und D_{CM} auf unterschiedlichen Baugruppen BG gespeichert, so dass der Sicherheitsmechanismus SM durch ein Ziehen derjenigen Baugruppe BG_{B1}, auf der die Daten D_{SM} gespeichert sind, ohne Verlust der Daten D_{CM} bewirkt werden kann. Als Folge bleiben bei einem als Netzelement NE eines Kommunikationsnetzes KN ausgebildeten Erzeugnis E bestehende Übermittlungsvorgänge von dem Zurücksetzen unberührt.

## Beschreibung

In dem internationalen Standard M.3010 (02/2000) der ITU-T ist eine Referenzarchitektur eines Telecommunications Management Network (TMN) zur Überwachung und Steuerung eine Netzes für Telekommunikationsanwendungen beschrieben, bei der davon ausgegangen wird, dass das von dem TMN gesteuerte Netz unterschiedliche Typen von Netzelementen umfasst, die üblicherweise mit Hilfe von unterschiedlichen Kommunikationsmechanismen (d.h. Protokollen, Meldungen, Management Informationen - auch Objektmodell genannt) gesteuert werden.

Dieses TMN umfasst folgende Funktionalitäten:
- Operations Systems Function (OSF), die das "eigentliche" Management des Telekommunikationsnetzes realisiert.
- Workstation Function (WSF), die zur Darstellung der Steuervorgänge und des Netzzustandes für einen menschlichen Anwender des TMN dient.
- Network Element Function (NEF), die eine Schnittstelle zur Steuerung der Telekommunikations-Funktionen der Netzelemente darstellt. Die Schnittstelle definiert den spezifischen Kommunikationsmechanismus des jeweiligen Netzelements, der ggf. nicht standardisiert ist. Die Summe aller Management Informationen des NE wird als Management Information Base (MIB) des NE bezeichnet. Sie wird im weiteren auch NE-MIB ganannt.
- Transformation Function (TF), die zur Verbindung von Komponenten mit unterschiedlichen Kommunikationsmechanismen und insbesondere zur Anbindung von Netzelementen, die keine standardisierte NEF aufweisen, an das TMN eingesetzt wird. Sie wird in dem Standard M.3010 (05/96) auch als Mediation Function bzw. als Q-Adaption Function bezeichnet.

Desweiteren werden die Funktionalitäten entsprechend des FCAPS Schemas, soweit möglich, in folgende Gruppen klassifiziert:
F = Fault
C = Configuration
A = Accounting
P = Performance
S = Security

Die Funktionen werden durch gegenständliche Erzeugnisse bewirkt, die beispielsweise als Netzelement (NE), Operations System (OS), Applikation, Terminal, Router, Switch, Datenbankserver oder Computerprogrammprodukt ausgebildet sein können, aber selbstverständlich nicht auf diese beschränkt sind.

Die Funktion NEF ist üblicherweise einem NE zugeordnet, während die Funktionen OSF und WSF meist einem OS zugeordnet sind. Üblicherweise ist einem OS eine Vielzahl von NE zugeordnet, wobei das OS meist zentralisiert ist, während die NE in dem Netz dezentral auf eine Vielzahl von Standorten verteilt sind.

Zwischen NE und OS kann ein Data Communication Networks (DCN) zur Übermittlung von Informationen vorgesehen sein. Die Übermittlung folgt den Prinzipien des Transportdienstes, so wie er in den unteren Schichten des ISO/OSI Referenzmodells im internationalen Standard X.200 beschrieben ist.

Ein OS kann mehrere Programme - auch Applikationen oder Software genannt - umfassen. Die Programme können beispielsweise als Managementapplikationen zur Steuerung unterschiedlicher Netztechnologien eines Kommunikationsnetzes ausgebildet sein, von denen jeweils eine für die jeweils gesteuerte Technologie relevante, applikationsspezfische Teilmenge der Resourcen des Netzes modelliert, visualisiert und gesteuert wird.

Die Programme werden von Hardware (z.B. Prozessor, i/o Baugruppe) ausgeführt, die in den Einrichtungen vorgesehen ist. Diese Ausführung wird von Supportsoftware (z.B. Multitasking bzw. Multithreading Betriebssystem, Datenbanksystem, Windows System) unterstützt.

Die Security Funktionalität wird in den Erzeugnissen beispielsweise durch Sicherheitsmechanismen realisiert, bei denen der abgesicherte Zugang zu den Erzeugnissen mit Zugangsbereichtigungen - z.B. über eine Benutzerkennung (userId) und ein Kennwort (password) und/oder über Vorlage eines Sicherheitszertifikats - ermöglicht wird.

In zeitgemäßen Systemen weisen die in OS und NE vorhandenen Sicherheitsmechanismen üblicherweise einen Grundzustand auf. Beispielsweise sind sie nicht aktiviert oder haben eine "default userId" und ein "default password" zum erstmaligen Zugang zu den Erzeugnissen, z.B. in der Fabrik oder bei der Inbetriebnahme beim Kunden. Nach erstmaligen Zugang können von entsprechend privilegierten Benutzern - auch Sicherheitsadministratoren genannt - der Erzeugnisse weitere userID's mit zugehörigen password's eingerichtet werden. Außerdem wird in diesem Zusammenhang meist das default password geändert.

Nach dem bislang Ausgeführten wird klar, dass die Umsetzung der beschriebenen Architektur in konkrete Lösungen infolge der ausgeprägten Verteiltheit des Systems und der Vielzahl an unterschiedlichen Systemkomponenten und -anforderungen eine hochgradig komplexe technische Problemstellung darstellt.

Es ist Aufgabe der Erfindung, zumindest eines der bestehenden Probleme zu erkennen und durch Angabe von zumindest einer Lehre zum technischen Handeln zu lösen.

Die Erfindung beruht auf folgenden Erkenntnissen:
- Bei Verlust einer Zugangsberechtigungen ist für deren (e-hemaligen) Besitzer kein Zugang zu dem derart gesicherten System mehr möglich. Bei Verlust aller Zugangsberechtigungen ist überhaupt kein Zugang zu dem System mehr möglich. In diesem Fall wird meist mit Hilfe einer Sonderprozedur der Zugang zu dem System wieder hergestellt. Gleiches kann auch dann erforderlich sein, wenn die Zugangsberechtigung des Sicherheitsadministrators verloren geht. Dies ist z. B. dann der Fall, wenn ein besonders wichtiges Kennwort wie das des Sicherheitsadministrators (z.B. unter Unix die sogenannte "root" - Kennung) verloren gegangen ist, weil dann das NE nicht mehr sinnvoll administriert werden kann. Vergleichbares gilt, wenn das Zertifikat für den Sicherheitsadministrator abgelaufen ist und vom NE nicht mehr akzeptiert wird. Als Folge dieses Verlusts kann das betroffene NE zunächst nicht mehr vollständig verwaltet werden. Dies kann mit der Zeit dazu führen, dass das Netzelement überhaupt nicht mehr kontrollierbar ist, weil z.B. wegen längerer Nichtnutzung von Operatorkennungen diese automatisiert gesperrt werden und durch den Sicherheitsadministrator freigegeben werden müssen, der aber ebenfalls nicht mehr nutzbar ist. Dies führt zu Kosten beim Netzbetreiber und ggf. zu Kosten beim Hersteller. Aus diesem Grunde muss es ein kontrolliertes Verfahren geben, dass die vollständige Kontrolle des Netzelementes wieder ermöglicht.
- Die Anforderungen der Telekommunikationsbetreiber hinsichtlich Zugangskontrolle an Netzelemente mittels Sicherheitsmechanismen, die eine Benutzerkennung und ein Kennwort oder ein Benutzerzertifikat erfordern, nehmen zu. Mithin steigt auch die Anforderung, dass es für einen Benutzer keine Möglichkeit geben darf, diese Sicherheitsmechanismen zu umgehen.
   Dazu im Widerspruch steht die Anforderung, dass es bei Verlust bestimmter oder aller Zugangsberechtigungen möglich sein muss, den oder die Sicherheitsmechanismen zurück zu setzen.
- Die bekannten Techniken zum Zurücksetzen der Sicherheitsmechanismen haben unerwünschte Nebeneffekte und verstoßen insbesondere zu stark gegen die Anforderung, dass es für einen Benutzer keine Möglichkeit geben darf, diese Sicherheitsmechanismen zu umgehen:
   Eine Technik sieht vor, dass für den Fall, dass beispielsweise das Passwort des Sicherheitsadministrators verloren gegangen ist, der Zugang durch Ersetzen des Inhaltes der internen Datenbank der Netzelemente durch ein Backup, das ein bekanntes Kennwort enthält, wieder ermöglicht wird. Bei dem Ersetzen des Inhalts der Datenbank durch einen Backup werden meist auch in dem Backup enthaltene, veraltete Konfigurationsdaten auf das NE geladen und das NE mit veralteten Daten wieder in Betrieb genommen. Hier besteht auch die Gefahr, dass wegen der veralteten Daten Verkehr abgeworfen wird.
   Eine andere Technik sieht vor, die NE interne Datenbank durch Ziehen und Stecken der sogenannten Datenbankkarte und durch Ziehen und Stecken der Hauptkontrollplatine zu löschen. Bei dem Ziehen und Stecken der Datenbankkarte ist anschließend ein Zustand wie bei einer Erstinstallation erreicht. Alle bislang eingerichteten Konfigurationsdaten sind ebenfalls gelöscht, weil sie in derselben Datenbank liegen wie die Zugangsberechtigungen. Das NE muss wieder mühsam konfiguriert werden; der bestehende Verkehr wird unterbrochen.

Eine Lösung für diese erfindungsgemäß erkannte Problemsituation sowie vorteilhafte Ausgestaltungen dieser Lösung sind in den Patentansprüchen angegeben.

Die Erfindung wird nachfolgend anhand von Ausführungsbeispielen, die auch in den Figuren dargestellt sind, erläutert. Es sei betont, dass die aufgezeigten Ausführungen der Erfindung trotz ihrer teilweise sehr detailgetreuen Darstellung lediglich beispielhafter Natur und nicht einschränkend zu verstehen sind. Es zeigt:

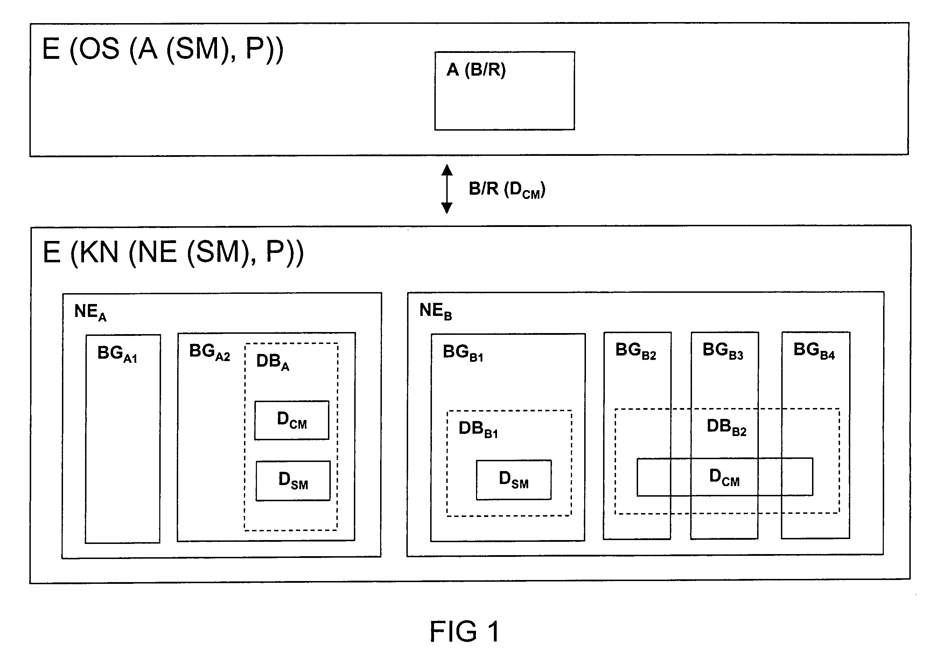

- Figur 1: eine beispielhafte Anordnung, umfassend ein zentrales Operations System OS mit Applikationen A zur Steuerung von dezentralen Elementen NE eines Kommunikationsnetzes KN

Als Lösung des Widerspruchs zwischen der geforderten Unumgehbarkeit und der geforderten Zurücksetzbarkeit der Sicherheitsmechanismen wird vorgeschlagen, dass die Forderung nach der Unmöglichkeit der Umgehung der Sicherheitsmechanismen möglichst wenig verletzt wird. Dies wird bewirkt, indem folgende Kriterien zumindest teilweise erfüllt werden:
1. Die Sicherheitsmechanismen dürfen nur lokal (mit physikalischen Kontakt zum NE) außer Betrieb genommen werden.
2. Die Außerbetriebnahme der Sicherheitsmechanismen erfordert zeitliche, d.h. zumindest kurzzeitige Änderung der Hardware-Konfiguration (z.B. Ziehen und Stecken von Baugruppen).

Zusätzlich soll eine weitere Bedingungen erfüllt sein, die eine Nutzung nach dem Zurücksetzen für einen unberechtigten Angreifer erschweren:
3. Die Datenbank für die Hauptplatine des NE wird gelöscht.

Damit der Schaden für den Betreiber klein bleibt, soll folgende Bedingung auch erfüllt sein:
4. Währung dieser Aktionen darf es nicht zum Verkehrsabwurf seitens des NE kommen.

Zur zumindest teilweisen Erfüllung dieser Kriterien werden die den Sicherheitsmechanismen zugeordneten Konfigurationsdaten so getrennt von den anderen Daten gespeichert, dass die nicht den Sicherheitsmechanismen zugeordneten Konfigurations- und Messdaten unverändert erhalten bleiben können, während die den Sicherheitsmechanismen zugeordneten Daten zurückgesetzt werden.

Dies ist auch notwendig, wenn es sich um Kennworte handelt, die aus dem NE nicht gelesen werden dürfen. Dieses Leseverbot gilt auch, wenn Kennworte dauerhaft gespeichert werden und das Hochladen der NE-internen Daten möglich ist. In diesem Fall dürfen die Speicherbereiche, die Konfigurations- und andere Daten von Sicherheitsmechanismen dauerhaft halten, nicht im Rahmen eines Backup der Daten hochladbar sein.

Bei einer Ausführung der Erfindung, bei der die physikalisch getrennt gespeicherten Daten auf derselben Baugruppe gespeichert werden, können deshalb die nicht den Sicherheitsmechanismen zugeordneten Konfigurations- und Messdaten in die NEinterne dauerhafte Datenbank zurückgeschrieben werden, ohne dass sich etwas an den gespeicherten Konfigurationsdaten für Sicherheitsmechanismen ändert. Werden dabei die nicht den Sicherheitsmechanismen zugeordneten Konfigurations- und Messdaten regelmäßig gesichert, können nach einem Zurücksetzen der Sicherheitsmechanismen die aktuellsten Daten in das NE zurückgeschrieben werden und die Steuereinheit des NEs kann ihren Dienst ohne Unterbrechung des Telekommunikationsverkehrs wieder aufnehmen.

Besonders schöne Vorteile sind mit einer Ausführung verbunden, bei der die den Sicherheitsmechanismen zugeordneten Konfigurationsdaten dauerhaft physikalisch getrennt, z.B. auf einer speziellen Baugruppe, gespeichert werden und diese Baugruppe durch eine andere ersetzt werden kann, die die Konfigurationsdaten für die Sicherheitsmechanismen in dem Grundzustand enthält. In diesem Falle entfällt das Hochladen der den Sicherheitsmechanismen zugeordneten Konfigurations- und Messdaten. In diesem Falle müssen lediglich die Sicherheitsmechanismen neu konfiguriert werden, der Telekommunikationsverkehr bleibt davon unberührt. Da in aller Regel der Zugang zu einem Netzelement und damit zu den Baugruppen mit Schlüssel und Schloss gesichert ist, ist auch damit für hinreichende Sicherheit gesorgt.

Nach Durchführung der Außerbetriebnahme und Wiederinbetriebnahme ist das NE hinsichtlich der Sicherheitsmechanismen in einem Zustand, welcher der Erstinbetriebnahme entspricht. Je nach Grundzustand der Sicherheitsmechanismen sind diese nicht aktiviert oder es steht eine "default userId" und ein "default password" für den Sicherheitsadministrator zur Verfügung.

Die übrigen nicht den Sicherheitsmechanismen zugeordneten Konfigurations- und Messdaten können nach diesen Maßnahmen unverändert wieder zur Verfügung gestellt werden. Die Unterbrechung von Telekommunikationsverkehr wird vermieden.

Die Ausführung der Erfindung wird im weiteren auch mit Hilfe der Figur 1 dargestellten Anordnung erklärt, die eine Vielzahl von verteilt angeordneten gegenständlichen Erzeugnissen E umfasst. Die Erzeugnisse E sind beispielsweise als dezentral verteilt angeordnete Netzelemente NE_{A}, NE_{B} eines Kommunikationsnetzes KN oder als zentrales Operations System OS mit Applikationen A zur Steuerung der dezentralen Elementen NE des Kommunikationsnetzes KN ausgebildet. Die Erzeugnisse weisen Sicherheitesmechanismen SM zum Verhinderung einer unbefugten Benutzung der Erzeugnisse auf, weil diese Erzeugnisse E nicht von beliebigen Personen uneingeschränkt gesteuert werden dürfen. Die Applikationen A sind beispielsweise als Applikation B/R zum Backup und Restore von nicht den Sicherheitsmechanismen SM zugeordneten Konfigurations- und Messdaten D_{CM} der Netzelemente NE ausgebildet. Weiterhin werden in den Netzelementen NE den Sicherheitsmechanismen SM zugeordnete Konfigurationsdaten D_{SM} gespeichert, die beispielsweise als Pärchen userId/password oder als Sicherheitszertifikate ausgebildet sind. Die Daten D_{SM} sind für die Applikation B/R nicht zugänglich und können nicht in das Operations System OS übermittelt werden.

Die Erzeugnisse E umfassen Hardware - insbesondere Prozessoren und Speichermittel -, mit deren Hilfe insbesondere diejenigen Erzeugnisse E durchgeführt werden, die als Computerprogrammprodukt P bzw. als Programm P ausbildet sind. Die Hardware kann auch unmittbar den Erzeugnissen E entsprechen, beispielsweise als Application Specific Integrated Circuit (A-SIC) oder ein gleichwertiges gegenständliches Erzeugnis E.

Den als Applikationen A ausgebildeten Erzeugnissen können die TMN Funktionsblöcke Operations Systems Function (OSF) und Workstation Function (WSF), den als Netzelemente NE ausgebildeten Erzeugnissen der TMN Funktionsblock Network Element Function (NEF) zugeordnet sein.

Das Operations System OS und die Netzelemente NE sind durch ein in der Fachwelt als Data Communication Network (DCN) bezeichnetes Datennetz verbunden, über das die Daten D_{CM} beim Backup/Restore durch die Applikation B/R übermittelt werden.

Die Netzelemente NE umfassen jeweils zumindest eine Baugruppe BG. In beiden Netzelementen NE sind die Daten D_{SM} und D_{CM} voneinander getrennt gespeichert. Im Netzelement NE_{B} sind sie darüber hinaus physikalisch dauerhaft getrennt gespeichert.

In dem Netzelement NE_{A} liegen die Daten D_{SM} und D_{CM} auf derselben Baugruppe BG_{A2} und sogar in derselben Datenbank DB_{A}, werden dort allerdings in unterschiedlichen Speicherbereichen so getrennt gespeichert, dass nur die Daten D_{CM}, aber nicht die Daten D_{SM} nach außen zugänglich sind und z.B. über das DCN an das Operations Systems OS übermittelt werden können und umgekehrt.

Bei Zurücksetzen des Sicherheitsmechanismus SM des Netzelements NE_{A} werden bevorzugt zunächst die Daten D_{CM} von der Applikation B/R in das Operations System OS geladen. Dann wird die Baugruppe BG_{A2} solange gezogen, bis die Datenbank DB_{A} und mithin die Daten D_{CM} und D_{SM} in dem Netzelement NE_{A} gelöscht sind. Nach dem Löschen der Daten D_{SM} befindet sich der Sicherheitsmechanismus SM des Netzelement NE_{A} wieder in seinem Grundzustand und ist entweder deaktiviert und weißt wieder die ursprüngliche default userid und das ursprünglichen default password für den Sicherheitsadministrator auf. Im Anschluss werden die Daten D_{CM} mit Hilfe der Applikation B/R wieder in das Netzelement NE_{A} eingespielt, so dass dieses wieder voll betriebsfähig ist und seine Sicherheitseinstellungen wieder konfiguriert werden können.

In dem Netzelement NE_{B} sind die Daten D_{SM} und D_{CM} auf unterschiedlichen Baugruppe BG_{B} physikalisch dauerhaft getrennt gespeichert. Die Daten D_{SM} liegen auf der Baugruppe BG_{B1} in der Datenbank DB_{B1}. Die Daten D_{CM} liegen in der Datenbank DB_{B2}, die über die Baugruppen BG_{B2-4} verteilt ist. Das Netzelement NE_{B} ist so eingerichtet, dass nur die Daten D_{CM}, aber nicht die Daten D_{SM} nach außen zugänglich sind und z.B. über das DCN an das Operations Systems OS übermittelt werden können und umgekehrt.

Bei Zurücksetzen des Sicherheitsmechanismus SM des Netzelements NE_{B} werden ist keine Sicherung der Daten D_{CM} von der Applikation B/R in das Operations System OS erforderlich. Dank der physikalisch getrennten Speicherung kann die Baugruppe BG_{B1} unmittelbar solange gezogen werden, bis die Datenbank DB_{B1} und mithin die Daten D_{SM} in dem Netzelement NE_{A} gelöscht sind. Nach dem Löschen der Daten D_{SM} befindet sich der Sicherheitsmechanismus SM des Netzelement NE_{B} wieder in seinem Grundzustand und ist entweder deaktiviert und weißt wieder die ursprüngliche default userId und das ursprünglichen default password für den Sicherheitsadministrator auf. Die Daten D_{CM} bleiben während dieses Zurücksetzens vollständig im Netzelement NE_{B} erhalten, so dass dieses dauerhaft auch während des Zurücksetzens des Sicherheitsmechanismus SM voll betriebsfähig bleibt.

Mit der Erfindung ist eine Vielzahl von Vorteilen verbunden:
- Wegen des Eingriffs von innerhalb des Erzeugnisses wird ein Eindringen in das Erzeugnis und insbesondere eine unbefugte Manipulation des Sicherheitsmechanismus von außerhalb, insbesondere von dem Operations Systems OS oder über das Data Communication Network, das u.a. auch das Internet umfassen könnte, wirksam verhindert.
- Wegen der physikalischen Trennung bleiben die übrigen Konfigurations- und Messdaten beim Zurücksetzen der Sicherheitsmechanismen unverändert.
- Ein Benutzer, der keinen physikalischen Zugang zum NE hat, kann aktive Sicherheitsmechanismen nicht umgehen.
- Der Zugang zu dem Netzelement kann auf sehr einfach Weise durch die Nutzung von Schlüssel und Schloss auf einen ausgewählten Personenkreis eingeschränkt werden, die dann das Zurücksetzen von Sicherheitsmechanismen durchführen können.
- Die durch fehlende Bedienbarkeit eines NE bedingten Kosten werden auf ein Minimum reduziert. Für einen Netzbetreiber ergeben sich durch Reduktion der OPEX (OPerational EXpenses) wirtschaftliche Vorteile.
- Eine Umsetzung der Erfindung erfordert keine prinzipiellen Änderungen des bisherigen Standes der Technik, sondern lässt sich grundsätzlich nachträglich als Baustein - insbesondere als modifiziertes oder zusätzliches Computerprogrammprodukt - einfügen.
- Der Zeitpunkt der Realisierung ist unabhängig von dem Zeitpunkt der Realisierung anderer Funktionen.
- Mit der Erfindung wird sichergestellt, dass die einzelnen Komponenten des Gesamtsystems nur in geringem Maße belastet werden und damit die Stabilität des Gesamtsystems erhöht wird.

Abschließend sei darauf hingewiesen, dass die Beschreibung der für die Erfindung relevanten Komponenten des Systems grundsätzlich nicht einschränkend in Hinblick auf eine bestimmte physikalische Realisierung oder Zuordnung zu verstehen ist. Für einen einschlägigen Fachmann ist insbesondere offensichtlich, dass die Erfindung teilweise oder vollständig in Software und über mehrere physikalische Erzeugnisse /Computerprogrammprodukte verteilt realisiert werden kann.

## Patentansprüche

1. Verfahren zum Zurücksetzen eines, einem Erzeugnis (E) - insbesondere einer als Computerprogrammprodukt (P) ausgebildeten Applikation (A) eines Operations Systems (OS) oder einem Netzelement (NE) eines Kommunikationsnetzes (KN) - zugeordneten Sicherheitsmechanismus (SM), mit
- ersten Daten (D_{SM}), die dem Sicherheitsmechanismus zugeordnet sind,
- zweiten Daten (D_{CM}), die anderen Funktionen als dem Sicherheitsmechanismus zugeordnet sind,
- wobei nur die zweiten Daten von außerhalb des Erzeugnisses zugänglich sind,
mit folgenden Schritten:
- Löschen der ersten Daten durch einen Eingriff von innerhalb des Erzeugnisses,
- Zurücksetzen des Sicherheitsmechanismus infolge des Löschens der ersten Daten.

2. Verfahren nach dem vorstehenden Anspruch,
bei dem der Eingriff als lokales Ziehen einer Baugruppe (BG) des Erzeugnisses ausgebildet ist.

3. Verfahren nach dem vorstehenden Anspruch,
bei dem nach dem Ziehen entweder die gezogene Baugruppe oder eine, einen zurückgesetzten Sicherheitsmechanismus umfassende, alternative Baugruppe wieder in das Erzeugnis eingefügt wird.

4. Verfahren nach einem der vorstehenden Ansprüche,
bei dem die beiden Daten physikalisch dauerhaft voneinander getrennt - insbesondere auf unterschiedlichen Baugruppen gespeichert werden.

5. Verfahren nach dem vorstehenden Anspruch,
bei dem die Baugruppe, auf der die ersten Daten gespeichert sind, gesondert - insbesondere mechanisch gegen ein unbefugtes Ziehen - gesichert wird.

6. Verfahren nach einem der vorstehenden Ansprüche,
bei dem die zweiten Daten vor dem Eingriff außerhalb des Erzeugnisses zwischengespeichert und nach dem Eingriff wieder in das Erzeugnis zurückgespeichert werden.

7. Verfahren nach einem der vorstehenden Ansprüche,
bei dem der Sicherheitsmechanismus sich nach dem Zurücksetzen wieder in seinem ursprünglichen Grundzustand befindet.

8. Erzeugnis, umfassend Mittel zur Durchführung aller Schritte eines Verfahrens nach einem der vorstehenden Verfahrensansprüche.

9. Erzeugnis, umfassend Mittel zur Durchführung der von dem Erzeugnis bewirkten Schritte eines Verfahrens nach einem der vorstehenden Verfahrensansprüche, die so eingerichtet sind, dass durch Zusammenwirkung mit zumindest einem weiteren derartigen Erzeugnis, dessen Mittel zur Durchführung der restlichen Schritte des Verfahrens eingerichtet sind, alle Schritte des Verfahrens durchgeführt werden.

10. Erzeugnis nach einem der beiden vorstehenden Ansprüche, ausgebildet als Computerprogrammprodukt (P), dessen Programmcode zur Durchführung des Verfahrens von zumindest einem Prozessor ausgeführt wird.
